# EUROPEAN PATENT SPECIFICATION

(11) **EP 0 391 670 B1**
(45) Date of publication and mention of the grant of the patent: **08.11.1995**
(21) Application number: 90303569.9
(22) Date of filing: 03.04.1990
(51) Int. Cl.: G06K 15/02

(54) **Dot pattern signal generator**
Punktmustersignalgenerator
Générateur de signaux de configuration de points

(30) Priority: 03.04.1989 JP 85610/89
(43) Date of publication of application: 10.10.1990
(73) Proprietor: SEIKO EPSON CORPORATION, Shinjuku-ku Tokyo (JP)
(72) Inventor: Kajimoto, Kazuhiro, Suwa-shi, Nagano-ken (JP)
(74) Representative: Sturt, Clifford Mark

(56) References cited:
- EP-A- 0 215 664
- WO-A-86/01154
- IEEE TRANSACTIONS ON PATTERN ANALYSIS AND MACHINE INTELLIGENCE, vol. PAMI-4, no. 3, May 1982, pages 331-335, IEEE, New York, US; R.A. ULICHNEY et al.: "Scaling binary images with the telescoping template"

## Description

The invention relates to a dot pattern signal generator, of the type comprising an outline memory for storing data representing an outline of a pattern, outline reproducing means responsive to an external signal for selectively reading out the stored data and for computing pattern outline data on the basis of the read out data and means for generating from the computed pattern outline data dot pattern data representing the pattern as an arrangement of a plurality of dots.

In dot pattern signal generators, printing quality has been improved by increasing the number of dots forming a character pattern. However, such an increase also results in the memory capacity of the character generator for storing character patterns increasing.

In a proposed method for solving this problem, an outline of a character pattern is divided into a plurality of segments, wherein the co-ordinates of a starting point and an ending point for each of the segments is stored as outline data and these co-ordinates are converted to dot pattern data for providing a display or a printed output.

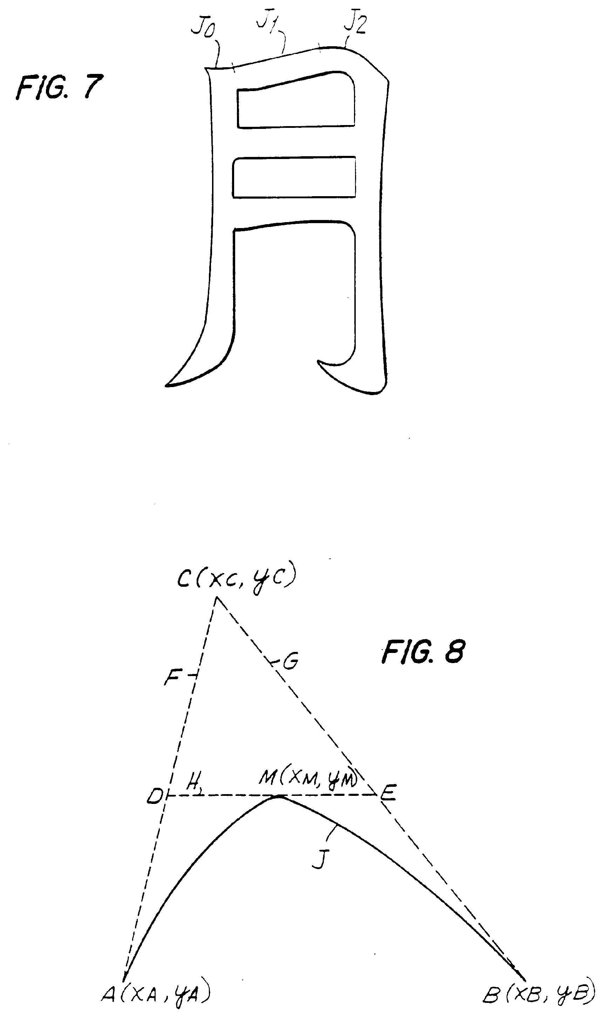

A conic spline curve obtained as an approximation of a line segment forming part of an outline of a character pattern has the property that, if the intersection of the tangents F, G (cf Fig. 8) from a starting point A and an ending point B is assumed at a control point C, the line H connecting the intermediate points D, E of the tangents F and G in relation to a control point C, the starting point A and the ending point B are in contact at an intermediate point M with the conic spline curve. Therefore, the outline can be reproduced by storing the appropriate co-ordinates.

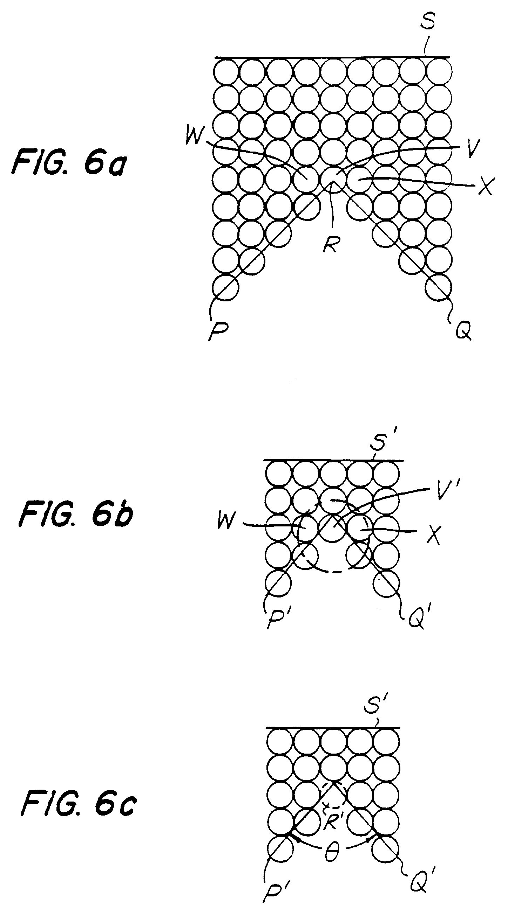

Accordingly, magnification and reduction of character size can be realised and character quality can be improved, while reducing the quantity of data to be stored. However, a problem still arises in that, if a character pattern of a standard size as stored is reduced, overlapping of the dots at intersecting areas of the outline may occur, resulting in a deterioration of character quality. More especially, an outline font is provided by depicting an original pattern on a bit map and storing data indicating the outline thereof. Then, during printing, the area surrounded by the outline is converted into dots. Accordingly, when the original pattern of a standard size is reduced, a dot V, near an intersecting point R of two outline segments P, Q and representing the accurate interval in the bit map for a standard size as shown in Figure 6A, is brought extremely close to the adjacent dots W, X, as shown in Figure 6B.

These dots V, W, X partially overlap the printing, resulting in the problem that density increases or a line width becomes thick.

In the case of a laser printer, when portions of a latent image on a photo sensitive drum for forming dots come closer to each other, potential for a portion when the latent image is not formed changes towards the potential level of a latent image portion and toner thereby adheres where it is not intrinsically meant to adhere, as a result of which line width becomes thick. Moreover, in the case of an ink jet printer or wide dot printer, ink forming the dots penetrates into the surface of the print medium and a dot diameter becomes large, promoting an overlap in the dots and the thick line width.

EP-A-0 215 664 discloses a method and apparatus for creating and storing characters for display on a video screen capable of displaying graphic characters at various degrees of resolution. A graphic character is stored as a bit map or as coefficients of spline curves which can be scaled up or down to give different character sizes.

According to an aspect of the present invention, there is provided a dot pattern signal generator of the aforesaid type, characterised in that:
the outline reproducing means include adjustment means for determining an indication of the scale factor of said pattern or an indication of the spacing between an intersection point of two adjacent outline segments and an outline segment opposed thereto and for determining from the computed pattern outline data an indication of the angle between said adjacent outline segments whereby said adjustment means determines a number of dots to be omitted from said dot pattern data; and
means for controlling the dot pattern data generating means so as to generate adjusted dot pattern data representing the pattern as the arrangement of the plurality of dots from which said number of dots is selectively omitted in the vicinity of the intersection point of said adjacent outline segments.

In a preferred embodiment, when a spacing between a couple of segments near a point of intersection of the segments is diminished as a result of a specified reduction in outline size, the generation of dots in this region, which is relatively reduced by comparison with dot size, is inhibited and thereby generation of a dot pattern of compressed character is reduced or prevented and deterioration in printing quality is largely avoided.

The present invention will be described further, by way of example, with reference to the accompanying drawings, in which:-
Figure 1 is a block diagram showing an embodiment of dot pattern signal generator according to the present invention;
Figure 2 is a diagram showing a data format in an outline data memory circuit of the pattern signal generator of Figure 1;
Figure 3 is a diagram showing a data format in a compensation data memory circuit of the pattern signal generator of Figure 1;
Figure 4 is a diagram showing the relationship between parameters indicated in Figure 3;
Figure 5 is a flow chart representing the operation of the pattern signal generator of Figure 1;
Figure 6 is a diagram for assistance in explaining the operation of the pattern signal generator of Figure 1; and
Figures 7 and 8 are diagrams for assistance in explaining how an outline font is generated in the pattern signal generator of Figure 1.

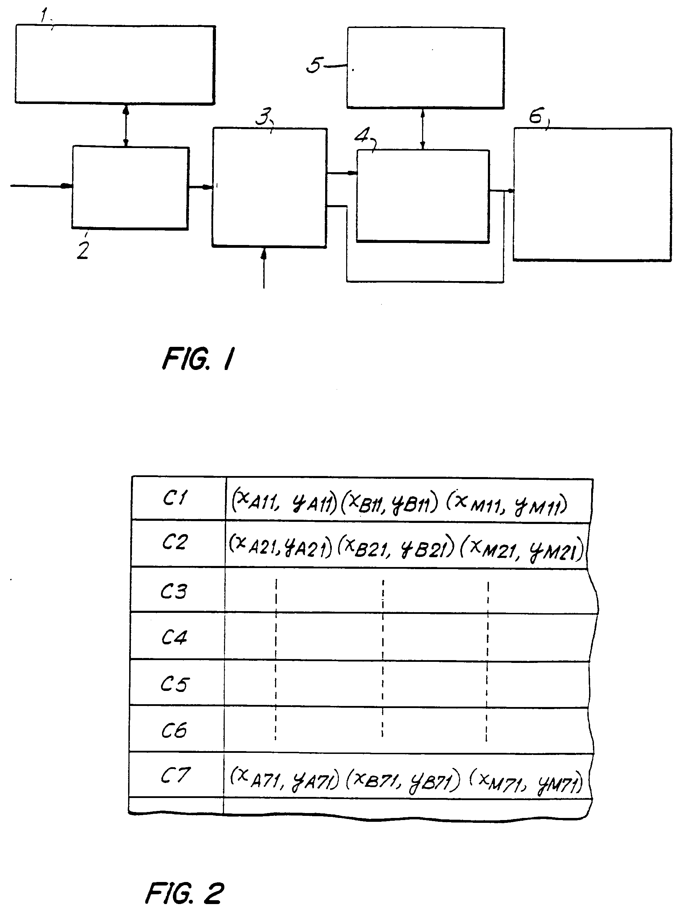

Figure 1 shows an embodiment of the present invention comprising an outline data memory circuit 1, in which: a character code is divided into a plurality of addresses C₁ ... Cₙ; an outline for a character of a standard size is separated into a plurality of segments J₀, J₁, J₂ (as indicated in Figure 7); and the co-ordinates of a starting point (X_{A}, Y_{A}), an ending point (X_{B}, Y_{B}) and a control point (X_{C}, Y_{C}) or an auxiliary point (X_{M}, Y_{M}) of the respective conic spline curve J approximating each segment are stored as data. In the case of a continuous outline, only the co-ordinates of the ending point and the auxiliary point may be stored because the co-ordinates of the starting point for each succeeding segment are the same as for the ending point of the preceding segment.

As further shown in Figure 1, an outline calculation circuit 3 converts the co-ordinates read from the memory circuit 1 by a read out circuit 2 so that the co-ordinates for the starting point, ending point and control or auxiliary point match a desired character size, and then outputs the computed outline data either direct to a dot pattern generating circuit 6 or, in the case of a reduced character size, to the dot pattern generating circuit 6 by way of a compensation calculating circuit 4.

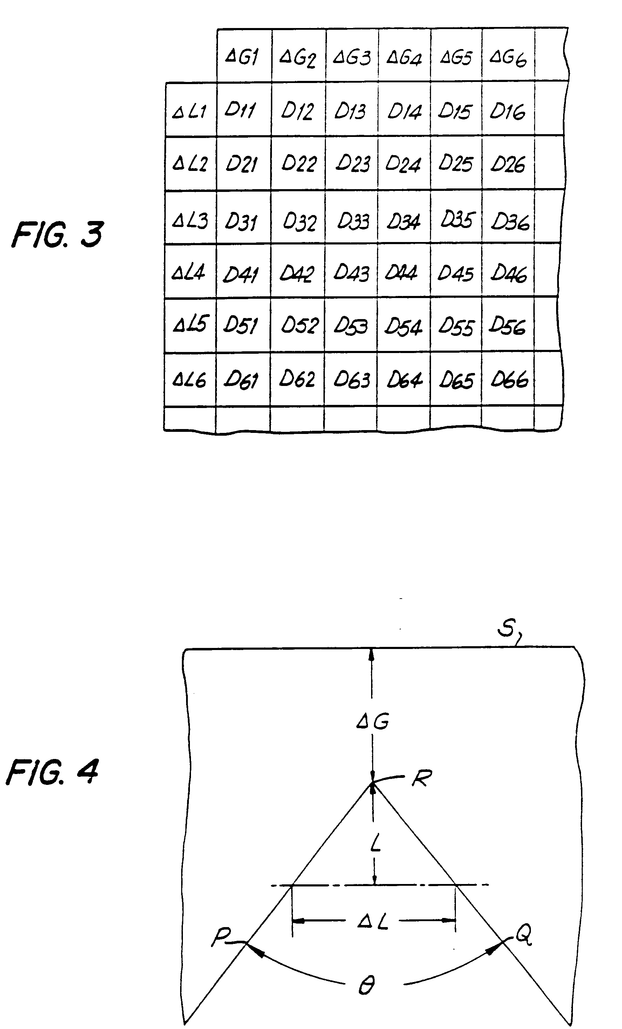

The compensation calculating circuit 4 calculates first a spacing ΔL between two intersecting segments P, Q of a character outline, where the spacing ΔL is measured at a fixed distance L from the point R of intersection of the segments P, Q and in the space outside the character outline, and secondly a spacing ΔG between the intersection point R and an outline segment S opposed to the point R as illustrated in Figure 4, in order to determine a corresponding value from a compensation data memory circuit 5. As described below, this value establishes a number of dots to be subtracted from a dot pattern for printing.

The compensation data memory circuit 5 stores the spacing ΔL and the spacing ΔG as addresses ΔL and ΔG shown in Figure 3, and also stores as data an optimum number of dots Dₘₙ to be subtracted for each pair of spacings ΔL and ΔG.

The dot pattern generating circuit 6 outputs a dot pattern signal based on the computed outline data supplied from the outline calculation circuit 3 or the compensation calculating circuit 4.

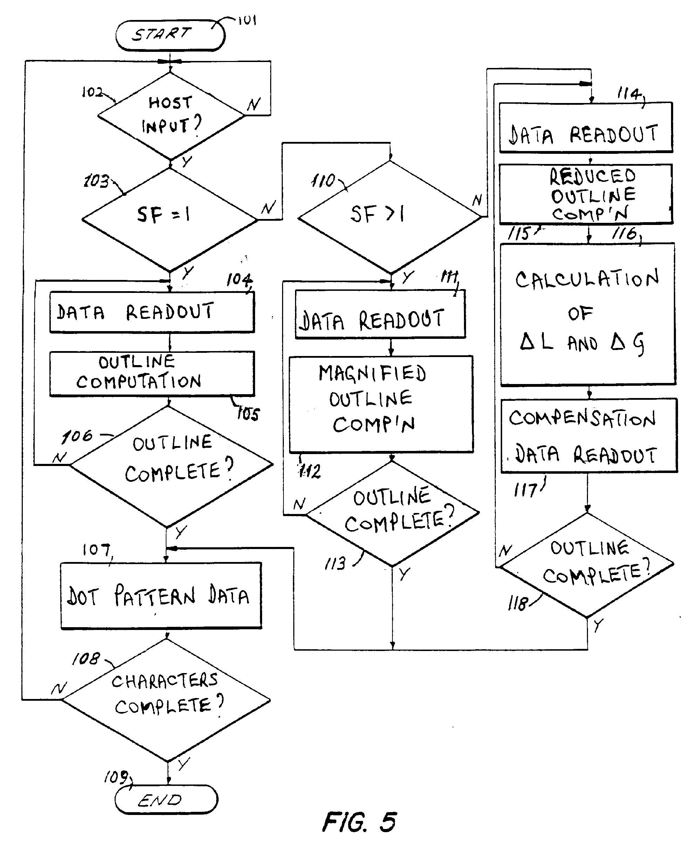

Next, the operation of the pattern signal generator arranged as described above will be explained with reference to the flow chart of Figure 5.

First, following the start of operation, (step 101), character data is input from a host unit (not shown) in step 102. The character data is reviewed in step 103 to establish whether it contains a character signal representing a scale factor of 1 (standard size).

### [Standard size]

In the case of a character signal output from the host unit designating the standard size, the outline calculation circuit 3 calculates the outline data from the co-ordinates of the starting point, the ending point and the auxiliary or control point read out from the outline data memory circuit 1 and the conic spline function (steps 104 and 105). In the next step 106, a check is made as to whether the computed outline data for an entire character is complete, and, if so, the dot pattern generating circuit 6 generates a dot pattern signal in step 107 for filling in the outline, and outputs this signal to an external output device. This situation is represented in Figure 6 (a).

### [Magnified size]

In the case of a character signal output from the host unit designating a size larger than the standard size (step 110), the outline calculation circuit 3 converts the co-ordinates of the starting point, the ending point and the auxiliary or control point read out from the outline data memory circuit 1 into co-ordinates corresponding to the designated magnified size, and calculates the outline data from such converted co-ordinates and the conic spline function (steps 111 and 112). When the computed outline data is complete in step 113, the dot pattern generating circuit 6 converts such data into a dot pattern signal in step 107 as before.

### [Reduced size]

In the case of a character signal output from the host unit designating a size smaller than the standard size, the outline calculation circuit 3 converts the co-ordinates of the starting point, the ending point and the auxiliary or control point read out from the outline data memory circuit 1 into co-ordinates corresponding to the designated reduced size, and then calculates outline data from these converted co-ordinates and the conic spline function (steps 114 and 115). The compensation calculating circuit 4 next calculates in step 116 the spacing ΔL between two intersecting segments P, Q, namely the spacing between the two segments through a reference point at a fixed distance L from the intersection point R (which is defined by the co-ordinates of the ending point of the one segment P or the co-ordinates of the starting point of the other segment Q), and the spacing ΔG between the intersection point R and the outline segment S opposed thereto. Then, in step 117, the compensation calculating circuit 4 reads the compensation data Dₘₙ based on the calculated values for ΔL and ΔG, and supplies the computed outline data to the dot pattern generating circuit 6 with the addition of a compensating signal to subtract the number of dots designated by the compensating data Dₘₙ.

The dot pattern generating circuit 6 generates dot patterns signals based on both the computed outline data and the compensating signal and thus does not generate dot pattern data for producing the dots which are supposed to be subtracted, namely for the dot V′ in the present example (see Figure 6). Consequently, the dot density in the vicinity of the intersection point of a couple of outline segments P′ and Q′ is lowered and so a thickening of line width can also be prevented.

In this embodiment, only one dot is subtracted at the intersection point R on the side of this point opposed to the outline segment S, but in the event that the spacing ΔL, namely the angle ϑ between the intersecting segments P, Q is small, fine pattern adjustment can be realised by subtracting a plurality of dots either on the side of the point R adjacent the outline segment S or on both sides of the point R.

In the above embodiment, only one reduction factor is discussed for simplification of the explanation, but a dot pattern of high character quality can be generated for each reduction factor by preparing appropriate compensating data (such as that illustrated in Figure 3) corresponding to each reduction factor.

Moreover, in the present embodiment, the invention is only applied in the case of size reduction but similar benefits can be obtained even in the case of size magnification.

In addition, the number of dots to be subtracted is determined depending on the distance, near the intersection point R, between a couple of the outline segments and the distance to the segment located opposite the intersection point, but the number of dots to be subtracted may also be determined depending on a specific reduction factor employed with only the distance between segments being used as a parameter.

Further, although the distance between intersecting segments is detected in this embodiment, similar results can equally be obtained by calculating the angle ϑ between two such segments at the time of calculating the outline data and by detecting the proximity of the segments near the intersection point by means of such angle and a reduction factor.

The described embodiment of the present invention enables a dot pattern of an image faithful to an original pattern to be formed by selectively interfering with dot generation at areas in which a plurality of outline segments cross and the external spacing between the segments becomes relatively narrow in comparison with the dot size.

## Claims

1. A dot pattern signal generator, comprising
an outline memory (1) for storing data representing an outline of a pattern,
outline reproducing means (2 to 5) responsive to an external signal for selectively reading out the stored data and for computing pattern outline data on the basis of the read out data, and
means (6) for generating from the computed pattern outline data dot pattern data representing the pattern as an arrangement of a plurality of dots; characterised in that
the outline reproducing means include adjustment means (4, 5) for determining an indication of the scale factor (SF) of said pattern or an indication of the spacing (ΔG) between an intersection point (R) of two adjacent outline segments (P, Q) and an outline segment (S) opposed thereto, and for determining from the computer pattern outline data an indication of the angle between said adjacent outline segments (P, Q) whereby said adjustment means (4,5) determines a number of dots to be omitted from said dot pattern data; and
means for controlling the dot pattern data generating means (6) so as to generate adjusted dot pattern data representing the pattern as the arrangement of the plurality of dots from which said number of dots is selectivelv omitted in the vicinitv of the intersection point (R) of said adjacent outline segments.

2. A dot pattern signal generator according to claim 1, wherein the adjustment means are arranged to determine the proximity of intersecting pattern outline segments according to a spacing (Δ L) between the segments at a predetermined distance from their intersection point (R).

3. A dot pattern signal generator according to claim 1 or claim 2, wherein the adjustment means are arranged to control the dot pattern data generating means so as to generate adjusted dot pattern data according to a spacing (ΔG) between the intersection point of the adjacent pattern outline segments and an opposed pattern outline segment(S).

4. A dot pattern signal generator according to claim 1 or 2, wherein the adjustment means are arranged to control the dot pattern data generating means so as to generate adjusted dot pattern data according to a selected scale factor for the size of the pattern.

5. A dot pattern signal generator according to any preceding claim, wherein the adjustment means include a compensation data memory circuit (5) for storing corresponding compensation values representing numbers of dots to be omitted.

## Patentansprüche

1. Zeichenpunktmustersignalgenerator, umfassend:
einen Umrißlinienspeicher (1) zum Speichern von Daten, welche eine Umrißlinie eines Musters repräsentieren,
Umrißlinienreproduktionsmittel (2 bis 5), welche auf ein externes Signal zum selektiven Auslesen der gespeicherten Daten und zum Berechnen von Musterumrißliniendaten auf der Grundlage der ausgelesenen Daten ansprechen,
sowie Mittel (6), um aus den berechneten Musterumrißliniendaten Zeichenpunktmusterdaten, welche das Muster als eine Anordnung einer Mehrzahl von Zeichenpunkten repräsentieren zu generieren,
dadurch gekennzeichnet, daß die Umrißlinienreproduktionsmittel umfassen:
Anpaßmittel (4, 5) um eine Angabe über den Skalierungsfaktor (SF) des Musters oder eine Angabe über den Zwischenraum (ΔG) zwischen einem Schnittpunkt (R) von zwei benachbarten Umrißliniensegmenten (P, Q) und einem diesem gegenüberliegenden Umrißliniensegment (S) zu bestimmen und um aus den berechneten Musterumrißliniendaten eine Angabe über den Winkel zwischen den benachbarten Umrißliniensegmenten (P, Q) zu bestimmen, wobei die Anpaßmittel (4, 5) eine Anzahl von aus den Zeichenpunktmusterdaten wegzulassenden Zeichenpunkten bestimmen,
sowie Mittel zum Steuern der Zeichenpunktmusterdaten-Generierungsmittel (6), um angepaßte Zeichenpunktmusterdaten zu generieren, welche das Muster als Anordnung der Mehrzahl von Zeichenpunkten repräsentieren, aus der die Anzahl von Zeichenpunkten in der Umgebung des Schnittpunkts (R) der benachbarten Umrißliniensegmente selektiv weggelassen ist.

2. Zeichenpunktmustersignalgenerator nach Anspruch 1, wobei die Anpaßmittel dazu ausgelegt sind, die Nähe von sich schneidenden Musterumrißliniensegmenten entsprechend einem Abstand (ΔL) zwischen den Segmenten in einer vorbestimmten Entfernung von ihrem Schnittpunkt (R) zu bestimmen.

3. Zeichenpunktmustersignalgenerator nach Anspruch 1 oder 2, wobei die Anpaßmittel dazu ausgelegt sind, die Zeichenpunktmusterdaten-Generierungsmittel derart zu steuern, daß sie angepaßte Zeichenpunktmusterdaten entsprechend einem Abstand (ΔG) zwischen dem Schnittpunkt der benachbarten Musterumrißliniensegmente und einem gegenüberliegenden Musterumrißliniensegment (S) generieren.

4. Zeichenpunktmustersignalgenerator nach Anspruch 1 oder 2, wobei die Anpaßmittel dazu ausgelegt sind, die Zeichenpunktmusterdaten-Generierungsmittel derart zu steuern, daß sie angepaßte Zeichenpunktmusterdaten entsprechend einem gewählten Skalierungsfaktor für die Größe des Musters generieren.

5. Zeichenpunktmustersignalgenerator nach einem der vorangehenden Ansprüche, wobei die Anpaßmittel eine Kompensierungsdaten-Speicherschaltung (5) zum Speichern von entsprechenden Kompensierungswerten, welche Anzahlen von wegzulassenden Zeichenpunkten repräsentieren, aufweisen.

## Revendications

1. Générateur de signaux de configuration de points comprenant:
une mémoire de contours (1) pour stocker des données représentant un contour d'une configuration,
un moyen de reproduction de configuration (2 à 5) réagissant à un signal externe pour lire sélectivement les données stockées et pour calculer des données de contour de configuration à partir des données lues, et
un moyen (6) pour générer, à partir des données de contour de configuration calculées, des données de configuration de points représentant la configuration en tant qu'agencement d'une pluralité de points ; caractérisé en ce que
le moyen de reproduction de contour comprend un moyen d'ajustement (4, 5) pour déterminer une indication du facteur d'échelle (SF) de ladite configuration ou une indication de l'espacement (ΔG) entre un point d'intersection (R) de deux segments de contour adjacents (P, Q) et un segment de contour (S) opposé à celui-ci, et pour déterminer à partir des données de contour de configuration calculées une indication de l'angle entre lesdits segments de contour adjacents (P, Q), ledit moyen d'ajustement (4, 5) déterminant un nombre de points à omettre à partir desdites données de configuration de points ; et
un moyen pour contrôler le moyen générateur de données de configuration de points (6) afin de générer des données de configuration de points ajustés représentant la configuration en tant qu'agencement de la pluralité de points dans laquelle ledit nombre de points est sélectivement omis au voisinage du point d'intersection (R) desdits segments de contour adjacents.

2. Générateur de signaux de configuration de points selon la revendication 1, dans lequel le moyen d'ajustement est agencé pour déterminer la proximité de segments de contour de configuration se coupant, d'après un espacement (ΔL) entre les segments à une distance prédéterminée de leur point d'intersection (R).

3. Générateur de signaux de configuration de points selon la revendication 1 ou 2, dans lequel le moyen d'ajustement est agencé pour contrôler le moyen générateur de données de configuration de points afin de générer des données de configuration de points ajustés d'après un espacement (ΔG) entre le point d'intersection des segments de contour de configuration adjacents et un segment de contour de configuration opposé (S).

4. Générateur de signaux de configuration de points selon la revendication 1 ou 2, dans lequel le moyen d'ajustement est agencé pour contrôler le moyen générateur de données de configuration de points afin de générer des données de configuration de points ajustés en fonction d'un facteur d'échelle choisi pour la taille de la configuration.

5. Générateur de signaux de configuration de points selon l'une quelconque des revendications précédentes, dans lequel le moyen d'ajustement comprend un circuit de mémorisation de données de compensation (5) pour stocker des valeurs de compensation correspondantes représentant des nombres de points à omettre.
